(19) Europäisches Patentamt
European Patent Office
Office européen des brevets

(11) **EP 2 529 522 B1**

(12) **FASCICULE DE BREVET EUROPEEN**

(45) Date de publication et mention
de la délivrance du brevet:
**08.10.2014 Bulletin 2014/41**

(51) Int Cl.:
*H04L 25/02* $^{(2006.01)}$     *H04L 25/03* $^{(2006.01)}$

(21) Numéro de dépôt: **10796426.4**

(22) Date de dépôt: **23.12.2010**

(86) Numéro de dépôt international:
**PCT/EP2010/070712**

(87) Numéro de publication internationale:
**WO 2011/091928 (04.08.2011 Gazette 2011/31)**

(54) **PROCEDE DE REDUCTION DE LONGUEUR DE CANAL, FILTRE ET SIGNAL CORRESPONDANTS**

VERFAHREN ZUM VERKÜRZEN DER KANALANTWORTLÄNGE, ENTSPRECHENDES FILTER UND SIGNAL

METHOD FOR REDUCING THE CHANNEL RESPONSE LENGTH, CORRESPONDING FILTER AND SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2010 FR 1050656**

(43) Date de publication de la demande:
**05.12.2012 Bulletin 2012/49**

(73) Titulaires:
• **Institut National Des Sciences Appliquées De Rennes**
**35043 Rennes Cedex (FR)**
• **CNRS**
**75794 Paris Cedex 16 (FR)**

(72) Inventeurs:
• **HELARD, Maryline**
**F-35700 Rennes (FR)**
• **CRUSSIERE, Matthieu**
**F-35770 Vern sur Seiche (FR)**
• **RAGOUBI, Karima**
**F-35700 Rennes (FR)**

(74) Mandataire: **Bioret, Ludovic**
**Cabinet Vidon**
**16 B, rue de Jouanet - B.P. 90333**
**35703 Rennes Cedex 07 (FR)**

(56) Documents cités:
• **PETER J W MELSA ET AL: "Impulse Response Shortening for Discrete Multitone Transceivers", IEEE TRANSACTIONS ON COMMUNICATIONS, IEEE SERVICE CENTER, PISCATAWAY, NJ, US, vol. 44, no. 12, 1 décembre 1996 (1996-12-01), XP011008850, ISSN: 0090-6778 cité dans la demande**
• **YEN-LIANG CHEN ET AL: "Cost-effective echo and NEXT canceller designs for 10GBASE-T ethernet system", CIRCUITS AND SYSTEMS, 2008. ISCAS 2008. IEEE INTERNATIONAL SYMPOSIUM ON, IEEE, PISCATAWAY, NJ, USA LNKD- DOI:10.1109/ISCAS.2008.4542126, 18 mai 2008 (2008-05-18), pages 3150-3153, XP031392681, ISBN: 978-1-4244-1683-7**

## Description

### 1. Domaine de l'invention

Le domaine de l'invention est celui des communications numériques. Plus précisément, l'invention concerne la réduction des longueurs des canaux de communications.

Le terme « réduction de longueur de canal de communication » signifie ici la réduction de la longueur d'un canal équivalent correspondant à un traitement appliqué au canal initial.

L'invention peut notamment s'appliquer aux communications numériques dans des systèmes mono-porteuses ou dans des systèmes multi-porteuses MC (multi-carrier) de type OFDM (« *Orthogonal Frequency Division Multiplex*» en anglais, pour « multiplexage par répartition orthogonale en fréquence ») ou DMT («*Digital Multi Tone* » en anglais, dont le principe est de diviser la bande passante disponible en un grand nombre de sous-bandes distinctes et de placer le signal numérique sur des porteuses analogiques).

### 2. Art antérieur

Il est connu que lorsque la réponse impulsionnelle des canaux de communication est supérieure à la durée symbole, ou en présence de multitrajets, une interférence entre les symboles (IES) apparait.

Actuellement, pour limiter les dégradations des performances en transmission mono-porteuse, des techniques d'égalisation ou de pré-égalisation sont mises en oeuvre.

Dans le cas alternatif des modulations multi-porteuses, la mise en oeuvre d'un intervalle de garde de taille suffisante permet d'absorber cette interférence et donc d'en annuler les effets. Néanmoins, lorsque la réponse impulsionnelle du canal est très longue, l'intervalle de garde peut prendre une dimension importante réduisant alors substantiellement l'efficacité spectrale du système.

D'autre part, dans certains systèmes, l'étalement effectif des retards dépasse la taille de l'intervalle de garde nuisant ainsi considérablement aux performances.

Afin de réduire l'étalement des retards du canal dans les systèmes mono-porteuse ou dans le cas des systèmes multi-porteuses pour réduire l'intervalle de garde ou faire en sorte que la réponse impulsionnelle soit contenue dans celui-ci, plusieurs techniques de réduction de longueur de canal ont été développées et appliquées à la définition structurelle d'un filtre de réduction de longueur de canal de la réponse impulsionnelle du canal.

Par exemple, dans le document « Adaptive channel memory truncation for maximum likehood sequence estimation » (D. Falconer et F. R. Magee Bell System Technical Journal, vol. 52, no. 9, pp. 1541-1562, 1973) une méthode de réduction de longueur de canal mettant en oeuvreun algorithme de minimisation de l'erreur quadratique (MMSE en anglais *« Minimum Mean Square Error »*) est proposée pour réduire la taille de canal. Plus précisément, selon cette technique, les coefficients d'un filtre de réduction de longueur de canal sont obtenus par l'application classique du critère de minimisation de l'erreur quadratique moyenne (EQM).

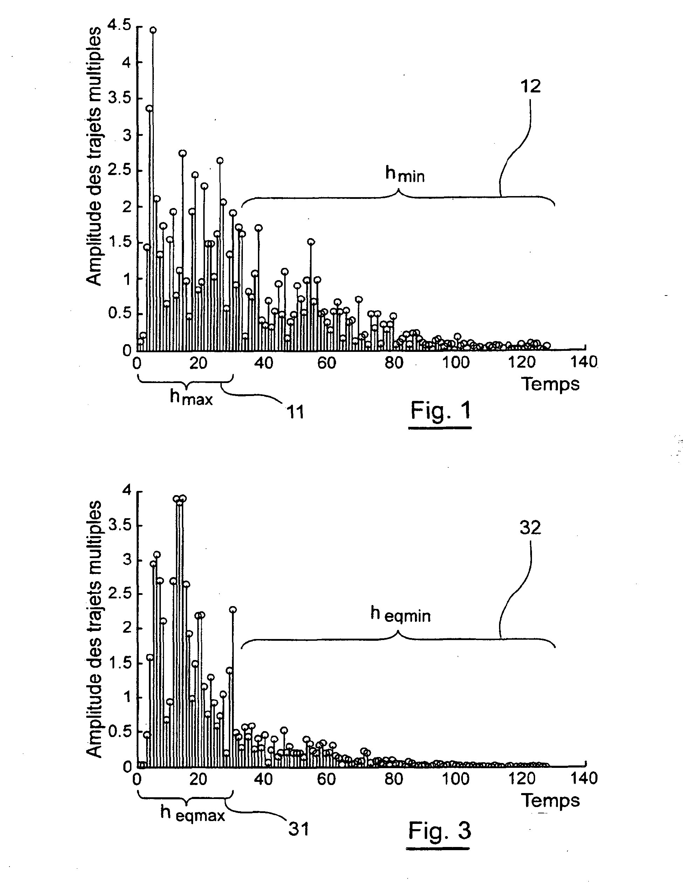

Alternativement, le document « Impulse response shortening for discrete multitone tranceivers », (J. W. Melsa, R. C. Younce, et C. E. Rohrs, IEEE Trans. Communications, vol. 44, no. 12, pp. 1662-1672, 1996.) propose une méthode MSSNR (en anglais *« Maximum Shortening Signal to Noise Ratio »*) permettant de minimiser l'énergie en dehors de l'intervalle de garde ou de maximiser l'énergie contenue dans l'intervalle de garde. Plus précisément, cette technique modélise le canal en deux parties l'une dite utile « $h_{max}$» comme illustré (11) sur la figure 1 et une autre partie à minimiser « $h_{min}$» (12) en utilisant un filtre w.

Classiquement, le canal équivalent est représenté par l'équation suivante :

$$h_{eq} = h * w = (\bar{h}_{max} + \bar{h}_{min}) * \bar{w}$$

Selon cette méthode, les coefficients du filtre sont obtenus en maximisant le rapport d'énergie entre $h_{max}$ et $h_{min}$ en utilisant un *unique* critère d'optimisation.

Dans le document « Impulse Response Shortening through Limited Time Reversed Channel in MB OFDM UWB Systems », (S.I. Husain, J. Yuan and J. Zhang, ISCIT 2007, pp. 1269-1273, Oct. 2007), le filtre de réduction de longueur de canal opère un retournement temporel limité à la partie $h_{min}$.

Par ailleurs, la combinaison de deux filtres distincts est également connue de l'art antérieur. Par exemple, l'un des filtres permet de concentrer l'énergie et l'autre agit sur le résultat de la convolution entre le canal et le filtre de concentration afin de rendre le canal le plus proche possible d'une réponse impulsionnelle idéale.

D'autres techniques ont été développées en variantes de ces techniques, on peut notamment citer la technique min-ISI développées dans le document « Equalization for discrete multitone receivers to maximize bit rate » (Arslan, B.

L. Evans, et S. Kiaei, IEEE trans. Signal Processing, vol. 49, no. 12, pp. 3123-3135, 2001) qui vise à s'affranchir des interférences dans le domaine férquentiel et consiste à généraliser la technique MSSNR précédemment décrite.

Les inventeurs ont constaté que ces techniques sont cependant limitées par deux inconvénients majeurs : d'une part la complexité de calculs des coefficients du ou des filtres de réduction et d'autre part le fait que ces techniques ne se révèlent pas assez performantes sur cetains types de canaux comme les canaux ultra large bande.

## 3. Exposé de l'invention

L'invention propose une solution nouvelle qui ne présente pas l'ensemble de ces inconvénients de l'art antérieur, sous la forme d'un procédé de réduction de longueur de canal mettant en oeuvreun filtre de réduction de longueur de canal tenant compte d'une réponse impulsionnelle de canal.

Selon l'invention, un tel procédé comprend les étapes suivantes :

- découpage du filtre en au moins une première et une deuxième parties ;
- optimisation de la première partie du filtre en fonction d'un premier critère, délivrant un premier ensemble de coefficients de filtrage;
- réduction de la longueur du canal par optimisation de la deuxième partie du filtre en fonction d'un deuxième critère, distinct du premier critère, et en fonction du premier ensemble de coefficients de filtrage de la première partie du filtre délivrant un deuxième ensemble de coefficients de filtrage.

Par ailleurs, ce procédé est suivi d'une étape d'application au canal du filtre de réduction de longueur de canal précédemment obtenu.

Ainsi, l'invention repose sur une approche nouvelle et inventive et permet après application au canal du filtre de réduction de longueur de canal, d'optimiser la concentration de l'énergie dans la partie utile du canal $h_{max}$ tout en réduisant la complexité de conception du filtre de réduction de longueur de canal. En effet, la succession des étapes du procédé selon l'invention et l'utilisation de deux critères distincts permet d'optimiser simplement l'obtention des coefficients des deux parties du filtre. L'utilisation conjointe de ces deux parties du filtre permet ensuite d'agir simultanément sur les deux parties $h_{max}$ et $h_{min}$ (en référence à la figure 1 de l'art antérieur).

Cette approche va à l'encontre des *a priori* de l'homme du métier. Il n'est en effet pas évident que l'utilisation de deux critères distincts permettant d'obtenir au moins deux ensembles de coefficients de filtrage d'un même filtre, le deuxième ensemble dépendant des coefficients du premier ensemble permettent de réduire la complexité de conception de ce filtre tout en obtenant de bonnes performances.

Comme on le verra par la suite, il résulte en effet de cette technique une meilleure efficacité de conception du filtre notamment en termes de minimisation du taux d'erreurs binaires.

Par ailleurs, plusieurs techniques d'optimisation peuvent être utilisées pour l'optimisation de la première partie du filtre on peut notamment choisir d'initialiser le premier ensemble de coefficients de filtrage notamment en utilisant une représentation sous la forme d'un dirac. On peut également utiliser les propriétés de la transformation en cosinus discrète (DCT en l'anglais *« Discrete Cosine Transform »*) pour concentrer l'énergie dans la partie utile du canal équivalent.

En outre, l'invention est efficace pour tous types de canaux de communication et notamment les canaux ultra large bande.

Selon une caractéristique particulière, le premier critère est obtenu par la détermination d'une première longueur $L_{max}$, correspondant à un premier nombre $L_{max}$ de coefficients d'une première partie d'un canal équivalent, le canal équivalent étant obtenu par application dudit filtre à la réponse impulsionnelle du canal.

On représente notamment le canal équivalent par l'équation suivante :

$$h_{eq} = h * w = (h_{max} + h_{min}) * w = h_{eq\,max} + h_{eq\,min}$$

La détermination de cette première longueur $L_{max}$ permet donc d'agir sur la complexité du système et ses performances. En effet, $L_{max}$ correspond au nombre de coefficients de canal équivalent sur lesquels est concentrée l'énergie dans la partie dite utile *heq_max* du canal équivalent. Cette détermination peut correspondre à un choix d'une valeur fixe de $L_{max}$ effectuée par le concepteur du filtre afin d'obtenir un niveau de performance donné, ou peut être choisie inférieure ou égale à la longueur d'un intervalle de garde ou encore à une valeur définie en fonction de la nature du canal de communication utilisé.

Avantageusement, l'obtention du premier critère met également en oeuvre la détermination d'une puissance maximale de ladite première partie du canal équivalent.

Ainsi, l'application du premier critère selon l'invention vise à concentrer le maximum d'énergie du signal dans la partie dite utile *heq_max* du canal équivalent.

Selon un aspect particulier de l'invention, le deuxième critère comprend la détermination d'une deuxième longueur *Lx* en fonction de ladite première longueur $L_{max}$.

Par exemple, ladite deuxième longueur *Lx* est égale à la longueur de canal additionnée à la longueur de filtre de réduction de longueur de canal réduite de ladite première longueur plus un. Dans ce cas, on peut représenter la longueur $L_x$ par l'équation suivante : $Lx = L_{min} + L_w - 1$ où $L_{min} = L_h - L_{max}$, avec $L_h$ la longueur de canal et $L_w$ la longueur du filtre.

Avantageusement, l'obtention dudit deuxième critère met également en oeuvre la détermination d'une puissance minimale d'une deuxième partie dudit canal équivalent.

Ainsi, l'application du deuxième critère selon l'invention vise à minimiser l'énergie du signal contenue dans la « queue » *heq_min* du canal équivalent.

De façon préférentielle, la puissance maximale de ladite première partie du canal équivalent est supérieure ou égale à la puissance des $L_{max}$ premiers coefficients de la réponse impulsionnelle du canal.

Avantageusement, la puissance minimale de ladite deuxième partie dudit canal équivalent est également inférieure ou égale à la puissance des coefficients restants de la réponse impulsionnelle.

En effet, grâce à cet aspect particulier de l'invention, on minimise l'énergie contenue dans la queue du canal équivalent c'est-à-dire dans la partie *heq_min* par rapport à la puissance contenue dans la partie $h_{min}$ du canal d'origine, c'est-à-dire pour les $L_h - L_{max} = L_{min}$ coefficients restants.

Grâce à ces contraintes sur le premier et le deuxième critères, on aboutit bien à une « réduction » de la longueur de canal équivalent utile, c'est-à-dire où est concentrée la majorité de l'énergie du canal. En effet, cette concentration de l'énergie aboutit à augmenter la puissance contenue dans la partie *heq_max* du canal équivalent par rapport à la puissance contenue dans la partie utile $h_{max}$ du canal d'origine.

Selon un autre aspect avantageux de l'invention, la première longueur $L_{max}$ est variable. Grâce à cet aspect, il est donc possible d'ajuster la complexité de calcul des coefficients du filtre. Par ailleurs, on peut ainsi également adapter le procédé selon les performances désirées ou encore selon le canal de communication visé.

Un mode de réalisation de l'invention est caractérisé en ce que ladite étape de réduction est itérée au moins une fois.

Ainsi, il est possible d'améliorer à chaque itération la détermination du deuxième ensemble de coefficients de filtrage, ce qui permet d'améliorer la réduction de la longueur du canal équivalent. Cette récursivité peut en outre être mise en oeuvre systématiquement jusqu'à atteindre un seuil prédéterminé de réduction de longueur de canal, ou elle peut également être mise en oeuvre à chaque variation de la réponse impulsionnelle du canal.

L'invention concerne également un filtre de réduction de longueur de canal tenant compte d'une réponse impulsionnelle de canal, comprenant :

- des moyens de découpage du filtre en au moins une première et une deuxième parties ;
- des moyens d'optimisation de ladite première partie du filtre en fonction d'un premier critère, délivrant un premier ensemble de coefficients de filtrage;
- des moyens de réduction de la longueur du canal comprenant des moyens d'optimisation de ladite deuxième partie du filtre en fonction d'un deuxième critère, distinct dudit premier critère, et en fonction dudit premier ensemble de coefficients de filtrage de ladite première partie du filtre délivrant un deuxième ensemble de coefficients de filtrage.

Un tel filtre est notamment obtenu par le procédé décrit précédemment. Par ailleurs ce filtre peut être mis en oeuvre à l'émission ou à la réception.

L'invention concerne également un système de réduction de longueur de canal tenant compte d'une réponse impulsionnelle de canal, comprenant au moins :

- un filtre d'émission comprenant des moyens d'optimisation du filtre d'émission en fonction d'un premier critère, délivrant un premier ensemble de coefficients de filtrage ;
- un filtre de réception comprenant des moyens de réduction de la longueur du canal comprenant des moyens d'optimisation du filtre de réception en fonction d'un deuxième critère, distinct dudit premier critère, et en fonction dudit premier ensemble de coefficients de filtrage dudit premier filtre d'émission délivrant un deuxième ensemble de coefficients de filtrage.

Par ailleurs, l'invention concerne également un signal de données, mis en oeuvre par le système de réduction de longueur de canal précédemment décrit, comprenant le premier ensemble de coefficients de filtrage obtenu pour un filtre d'émission précédemment décrit.

**4. Liste des figures**

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 discutée en préambule, illustre la réponse impulsionnelle d'un canal, par exemple un canal ultra large bande, sans traitement de réduction de longueur de canal ;
- la figure 2 illustre les principales étapes du procédé à l'émission ;
- la figure 3 illustre l'effet du procédé et représente la réponse impulsionnelle du canal, par exemple un canal ultra large bande, équivalent obtenu après traitement de réduction de longueur de canal ;
- la figure 4 est une représentation matricielle de l'opération de convolution aboutissant au canal équivalent obtenu selon le procédé de l'invention ;
- les figures 5, 6, 7 représentent respectivement un système mettant en oeuvre le procédé selon l'invention à l'émission, à la réception et de manière partagée, une partie du procédé étant effectuée à l'émission et la partie complémentaire étant effectuée à la réception ;
- la figure 8 compare la réponse impulsionnelle avec et sans le traitement de réduction de longueur de canal appliquée à une communication sur un canal ultra large bande CM4 (IEEE 80.2.15.3a) ;
- les figures 9 et 10 permettent d'établir une comparaison en termes de performances sans et avec traitement de réduction de longueur de canal selon le procédé de l'invention.

**5. Description d'un mode de réalisation de l'invention**

*5.1 Principe général*

Le principe général de l'invention repose sur la décomposition des coefficients d'un filtre de réduction de longueur de canal ainsi que les coefficients de la réponse impulsionnelle du canal en deux parties l'une utile où l'on concentre l'énergie du canal et l'autre où l'on minimise l'énergie du canal. Grâce à ce découpage, on détermine les coefficients *w* du filtre afin d'obtenir des coefficients de canal équivalent (le canal équivalent étant obtenu par application du filtre à la réponse impulsionnelle du canal) optimisés en fonction de deux critères distincts. Cette technique de réduction de longueur de canal permet ainsi de limiter les dégradations, liées à l'apparition d'interférence entre symboles lorsque la réponse impulsionnelle des canaux de communication est supérieure au temps symbole ou à l'intervalle de garde.

*5.2 Description d'un mode de réalisation*

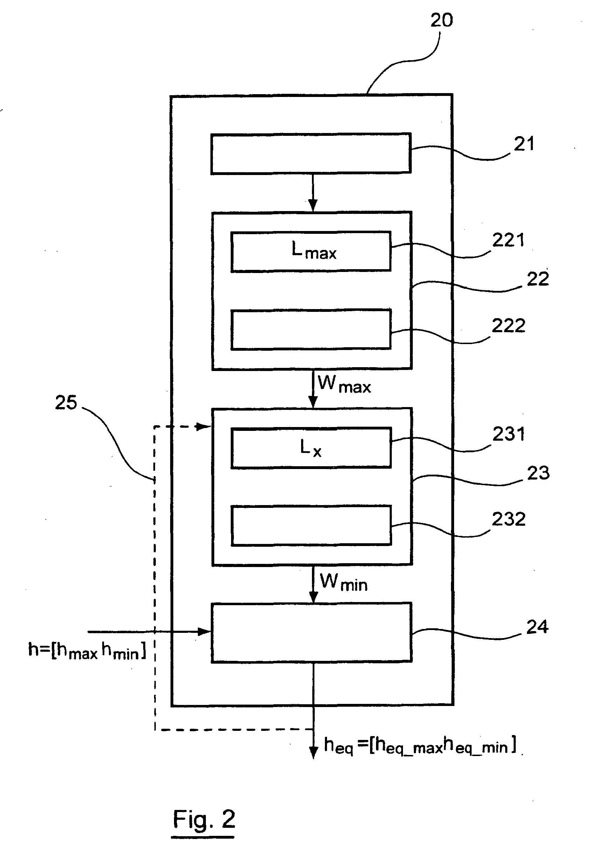

On présente, en relation avec la figure 2, les principales étapes du procédé (20) selon un premier mode de réalisation de l'invention mis en oeuvre à l'émission dans un contexte multi-porteuse.

Cette description d'un mode de réalisation particulier peut également être transposée au cas mono-porteuse.

Préalablement, on considère une décomposition des coefficients de la réponse impulsionnelle en deux parties :

$h = [h_{max} \ h_{min}]$

Par ailleurs, selon une première étape du procédé selon l'invention on met en oeuvre le découpage 21 du filtre de réduction de longueur de canal en une première et une deuxième parties :

$$w = [w_{max} \quad w_{min}]$$

L'effet combiné du filtre de réduction de longueur de canal et du canal s'écrit à partir de l'opération de filtrage, soit le produit de convolution, comme suit :

$$h_{eq} = w * h$$

ou

$$h_{eq} = h * w$$

selon que la réduction de longueur de canal est appliquée respectivement à l'émission ou à la réception, avec $h_{eq}$ étant un vecteur représentant le canal équivalent de taille $L_w + L_h - 1$ où $L_h$ est la longueur de canal et $L_w$ la longueur du filtre.

De la même manière que précédemment on modélise le canal équivalent en deux parties :

$$h_{eq} = \begin{bmatrix} h_{eq\_max} & h_{eq\_min} \end{bmatrix}$$

Le mode de réalisation décrit ci-après est appliqué à l'émission, mais peut être appliqué de manière similaire en réception.

L'étape suivante consiste à réaliser l'optimisation (22) de la première partie du filtre, en fonction d'un premier critère, délivrant un premier ensemble de coefficients de filtrage appelés coefficients $w_{max}$ (de la partie $w_{max}$ du filtre).

Cette étape d'optimisation (22) met en oeuvre, par exemple, deux sous étapes qui consistent respectivement à déterminer (221) la longueur $L_{max}$ de la première partie du filtre, c'est-à-dire le nombre des coefficients de la première partie du filtre, et par ailleurs à déterminer (222) la puissance maximale du canal équivalent, le canal équivalent étant obtenu par application du filtre à la réponse impulsionnelle du canal. Ces deux variables, à savoir la longueur $L_{max}$ et la puissance maximale, notée $P_{max}$, définissent les contraintes que doit satisfaire le premier ensemble de coefficients de filtrage.

Il convient de noter que la détermination de la puissance maximale du canal équivalent est optionnelle, cependant cette sous-étape permet à termes d'améliorer les performances du procédé, notamment, si on impose par exemple que la puissance maximale de la première partie du canal équivalent est supérieure ou égale à la puissance des $L_{max}$ premiers coefficients de la réponse impulsionnelle du canal, c'est-à-dire les coefficients de la partie $h_{max}$ en relation avec la figure 1.

Dans ce mode de réalisation particulier, on obtient donc à l'issue de ces deux sous-étapes un premier critère constitué de deux variables. On peut représenter ce critère par la notation suivante $C1(L_{max}, P_{max})$. L'application de ce critère permet de déterminer les coefficients de la première partie du filtre.

Le choix de $L_{max}$ permet d'agir sur la complexité du système et ses performances. En effet, $L_{max}$ correspond également au nombre de coefficients de canal équivalent sur lesquels est concentrée l'énergie dans la partie dite utile $h_{eq\_max}$ du canal équivalent. Le choix de $L_{max}$ peut correspondre à une valeur fixe de $L_{max}$ sélectionnée par le concepteur du filtre afin d'obtenir un niveau de performance donné, ou peut correspondre à la longueur de l'intervalle de garde ou encore à une valeur définie en fonction de la nature du canal de communication utilisé.

Le concepteur du filtre est libre de choisir les coefficients $w_{max}$ et la taille $L_{max}$ selon les performances du système qu'il souhaite atteindre (diminuer la taille du préfixe cyclique, réduire la complexité, augmenter la puissance...).

De manière optionnelle, on peut par exemple considérer par défaut une initialisation des coefficients $w_{max}$ par un dirac :

$$w_{max}(i) = \delta_{0,i}$$

Préférentiellement, on peut également utiliser la propriété de concentration d'énergie de la transformation en cosinus discrète (DCT en anglais « Discrete Cosine Transform ») pour définir les coefficients $w_{max}$ :

$$w_{max}(i) = \begin{cases} \sqrt{\dfrac{1}{L_{max}}} \cos\left[ \dfrac{\Pi(2i+1)}{2L_{max}} \right], & 0 < i \le L_{max} \\ \sqrt{\dfrac{2}{L_{max}}}, & i = 0 \end{cases}$$

Une fois les coefficients $w_{max}$ obtenus en respectant le critère C1, selon le procédé de l'invention, on passe à l'étape de réduction de la longueur du canal (23) par optimisation de la deuxième partie du filtre en fonction d'un deuxième critère noté C2, distinct du premier critère $C1$, et en fonction dudit premier ensemble de coefficients $w_{max}$ de filtrage de la première partie du filtre délivrant un deuxième ensemble de coefficients de filtrage appelés coefficients $w_{min}$ (de la partie $w_{min}$ du filtre).

Cette étape de réduction de la longueur de canal par optimisation (23) met en oeuvre, par exemple, deux sous-étapes qui consistent respectivement à déduire (231) en fonction de $L_{max}$, la longueur $L_x$ de la deuxième partie du filtre, et par ailleurs à déterminer (232) la puissance minimale du canal équivalent. Ces deux variables, à savoir la longueur $L_x$ et la puissance minimale notée $P_{min}$ correspondent aux variables du deuxième critère noté $C2(L_{min}, P_{min})$.

On peut noter que l'on déduit la longueur $L_x$ de l'étape précédente notamment par application de l'équation suivante : $L_x = L_{min}+L_w-1$ où $L_{min} = L_h-L_{max}$, avec $L_h$ la longueur de canal et $L_w$ la longueur du filtre avec $L_w \geq L_{max}$.

Les coefficients $w_{max}$ étant fixés à l'étape précédente, on détermine les coefficients $w_{min}$ de manière à ce que par exemple la variable puissance $P_{min}$ du critère C2 soit inférieure ou égale à la puissance des coefficients restants, c'est-à-dire des $L_{min}$ coefficients de la réponse impulsionnelle.

Par application de cette nouvelle contrainte selon le critère C2 et connaissant les coefficients $w_{max}$ précédemment obtenus, on obtient un système d'équations délivrant les coefficients $w_{min}$.

On peut noter, que le concepteur du filtre peut définir d'autres critères suivant les performances qu'il vise.

Une fois l'ensemble des coefficients w = [$w_{max}$ $w_{min}$] du filtre obtenus, on applique celui-ci sur la réponse impulsionnelle du canal et on obtient le canal équivalent représenté en relation avec la figure 3.

On remarque ainsi qu'en comparaison avec la figure 1, la puissance contenue dans la partie 31 $h_{eq\_max}$ du canal équivalent obtenu après traitement de réduction de canal est supérieure à celle contenue dans la partie 11 $h_{max}$ du canal d'origine. Par ailleurs, la puissance contenue dans la partie 32 $h_{eq\_min}$ du canal équivalent obtenu après traitement de réduction de canal est nettement inférieure à celle contenue dans la partie 12 $h_{min}$ du canal d'origine.

Ainsi, le traitement de réduction de longueur de canal opéré par le filtre aboutit bien à une concentration de l'énergie dans la partie utile de canal et à une minimisation de l'énergie dans la queue du canal.

L'ensemble des étapes précédemment décrites, constitue une première itération du procédé selon l'invention, qui dans ce mode de réalisation particulier peut réitérer (25) l'étape de réduction de longueur de canal afin de recalculer les coefficients $w_{min}$ obtenus à l'itération précédente.

Cette récursivité peut être mise en oeuvre systématiquement jusqu'à atteindre un seuil prédéterminé de réduction de longueur de canal, ou elle peut également être mise en oeuvre à chaque variation de la réponse impulsionnelle du canal.

Par ailleurs, le caractère itératif du procédé permet d'améliorer à chaque itération la détermination du deuxième ensemble de coefficients de filtrage, ce qui permet d'améliorer la réduction de la longueur du canal équivalent.

5.3 *Représentation matricielle d'un mode de réalisation du procédé selon l'invention.*

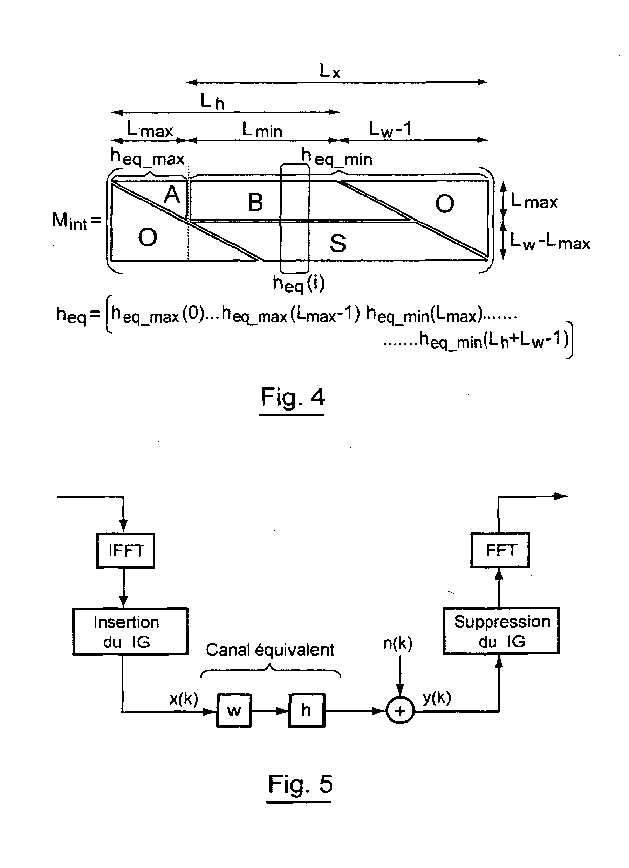

En relation avec la figure 4, on introduit pour le calcul des coefficients $w_{min}$ et $w_{max}$ la matrice $M_{int}$ tout en respectant les critères C1 et C2 obtenus précédemment.

Cette matrice $M_{int}$, appelée matrice intermédiaire de convolution, est obtenue en décomposant l'opération de convolution entre le filtre $w$ et la réponse impulsionnelle $h$. En effet, on rappelle que l'effet combiné du filtre de réduction de longueur de canal et du canal s'écrit à partir de l'opération de filtrage, soit le produit de convolution, comme suit :

$$h_{eq} = w * h$$

ou

$$h_{eq} = h * w$$

selon que la réduction de longueur de canal est appliquée respectivement à l'émission ou à la réception, avec $h_{eq}$ un vecteur représentant le canal équivalent de taille $L_w + L_h -1$ où $L_h$ est la longueur de canal et $L_w$ la longueur du filtre.

Selon l'invention, cette matrice est découpée en trois sous-matrices particulières :

- la matrice A qui est triangulaire supérieure et dont les éléments ne dépendent que de $h_{max}$ la première partie contenant les $L_{max}$ premiers coefficients de la réponse impulsionnelle du canal avant traitement de réduction de longueur de canal et $w_{max}$ , c'est-à-dire les $L_{max}$ premiers coefficients de la première partie du filtre ;
- la matrice S dont les éléments ne dépendent que de $w_{min}$ et que de $h$, la réponse impulsionnelle du canal ;
- la matrice B dont les éléments ne dépendent que de $w_{max}$ et de $h$.

La position du seuil représentée par la barre verticale séparant la matrice A et la matrice B est définie par la valeur de $L_{max}$ et peut être le cas échéant ajustée par le concepteur du filtre de réduction de longueur de canal. Comme illustré sur la figure 4, la longueur $L_{max}$ conditionne ainsi la taille des différentes matrices A, S, et B.

Par ailleurs, les coefficients du canal équivalent $h_{eq} =[h_{eq\_max}$ $h_{eq\_min}]$ sont le résultat de la sommation des éléments de la matrice intermédiaire $M_{int}$ colonne par colonne. Ainsi, répondre aux critères C1 et C2 énoncés précédemment, revient à dire que :

- la taille de $h_{eq\_max}$ est directement obtenue par le choix de la taille de $w_{max}$ et correspond donc à la longueur $L_{max}$,
- la maximisation de l'énergie selon le premier critère C1 contenue dans $h_{eq\_max}$ dépend uniquement du choix de $w_{max}$,
- la minimisation de l'énergie de $h_{eq\_min}$ selon le deuxième critère C2 dépend de la combinaison des matrices B et S, et donc du choix de $w_{min}$, en supposant $w_{max}$ fixé précédemment.

Ainsi, dans notre application, la matrice S est calculée pour chercher à annuler (ou à minimiser) $h_{eq\_min}$. Pour cela, on appelle le vecteur $\mathbf{s}_{vect}$, le vecteur résultant de la convolution de h et de $w_{min}$, c'est-à-dire le vecteur calculé par la sommation des coefficients des colonnes de S.

De même, on appelle $\mathbf{b}_{vect}$ le vecteur calculé à partir de la sommation des coefficients des colonnes de la matrice **B.**

Pour une représentation des calculs sous forme matricielle la taille de ce vecteur $\mathbf{b}_{vect}$ peut être étendue par des zéros afin que $\mathbf{s}_{vect}$ et $\mathbf{b}_{vect}$ aient la même dimension.

Par ailleurs, afin de minimiser $h_{eq\_min}$, on applique le critère C2 sous la forme suivante :

la somme $\mathbf{s}_{vect} + \mathbf{b}_{vect} = 0_{vect}$ ou s'approche du vecteur nul.

Pour déterminer les coefficients de $w_{min}$ on résoud alors le système suivant :

$$w_{min} * h = \mathbf{s}_{vect} = -\mathbf{b}_{vect}$$

Ce qui donne dans le domaine fréquentiel :

$$W_{min}H = S_{vect} = -B_{vect}$$

De plus, les inventeurs ont pensé à imposer certaines valeurs de $\mathbf{b}_{vect}$. Plus particulièrement, en fonction de l'objectif visé, les inventeurs proposent de fixer à l'avance certaines valeurs de $\mathbf{b}_{vect}$ à 0 ce qui permet de réduire la complexité des calculs matriciels et d'obtenir de meilleures performances.

On a ainsi $L_w + L_{min} - 1$ équations pour $L_w - L_{max}$ inconnues, avec :

$$A = \begin{pmatrix} w_{max}(0)h(0) & w_{max}(0)h(1) & \dots & w_{max}(0)h(L_{max}-1) \\ & w_{max}(1)h(0) & \dots & w_{max}(0)h(L_{max}-2) \\ & & \ddots & \dots \\ & & & w_{max}(L_{max}-1)h(0) \end{pmatrix}$$

$$B = \begin{pmatrix} w_{max}(0)h(L_{max}) & w_{max}(0)h(L_{max}+1) \dots & w_{max}(0)h(L_h-1) & & \\ w_{max}(1)h(L_{max}-1) & w_{max}(1)h(L_{max}) & \dots & w_{max}(1)h(L_h-2)\dots w_{max}(1)h(L_h-1) & \\ \vdots & \vdots & \vdots & \ddots & \\ w_{max}(L_{max}-1)h(1) & w_{max}(L_{max}-1)h(2)\dots & \dots & \dots & w_{max}(L_{max}-1)h(L_h-1) \end{pmatrix}$$

$$S = \begin{pmatrix} w(L_{max})h(0) & w(L_{max})h(1) & \dots & w(L_{max})h(L_h-1) & \\ & w(L_{max}+1)h(0) & w(L_{max}+1)h(1) & \dots & w(L_{max}+1)h(L_h-1) \\ & \ddots & & \ddots & \ddots \\ & & w(L_w-1)h(0) & w(L_w-1)h(1) & \dots & w(L_w-1)h(L_h-1) \end{pmatrix}$$

ou encore

$$S = \begin{pmatrix} w_{\min}(0)h(0) & w_{\min}(0)h(1) & \dots & w_{\min}(0)h(L_h-1) \\ & w_{\min}(1)h(0) & w_{\min}(1)h(1) & \dots & w_{\min}(1)h(L_h-1) \\ & & \ddots & & \ddots \\ & w_{\min}(L_w-L_{\max}-1)h(0) & w_{\min}(L_w-L_{\max}-1)h(1) & & w_{\min}(L_w-L_{\max}-1)h(L_h-1) \end{pmatrix}$$

Ainsi, selon cette représentation matricielle $M_{int}$, appelée matrice intermédiaire de convolution, obtenue en décomposant l'opération de convolution entre le filtre $w$ et la réponse impulsionnelle $h$, les étapes du procédé selon l'invention peuvent être réprésentées sous forme matricielle.

En effet, après découpage du filtre en au moins une première et une deuxième parties, on réalise l'optimisation de la première partie du filtre en fonction du premier critère C1, délivrant un premier ensemble de coefficients de filtrage.

Dans la représentation matricielle selon la figure 4, cette étape revient à choisir $L_{max}$, ce qui conditionne la taille des matrices A et B, puis on utilise $L_{max}$ pour déterminer $L_x$ le nombre de colonnes de la matrice S.

Par ailleurs, le choix des coefficients $w_{max}$ par application du critère C1 retenu permet de déterminer les valeurs de la matrice A.

Une fois la matrice A obtenue, on effectue l'étape de réduction de la longueur du canal par optimisation de la deuxième partie du filtre en fonction du deuxième critère C2, distinct dudit premier critère C1, et en fonction du premier ensemble de coefficients de filtrage $w_{max}$ de la première partie du filtre. On déduit ainsi les valeurs de B.

Puis on détermine les coefficients $w_{min}$ par application du critère C2 visant à minimiser voir annuler la « queue » $h_{eq\_min}$ de la réponse impulsionnelle du canal équivalent notamment par application de l'équation $$\mathbf{W}_{min} = -\frac{\mathbf{B}_{vect}}{\mathbf{H}}$$ dans le domaine fréquentiel où la division est effectuée élément par élément, c'est-à-dire sans inversion de matrice.

En pratique, selon l'invention, la taille de la transformée de Fourier est libre mais au moins égale à $L_w-L_{max}$.

Par ailleurs, on peut noter qu'il existe différentes manières de calculer $w_{min}$ : directement ou par algorithmes, dans le domaine temporel ou fréquentiel.

Ainsi, contrairement aux techniques de l'art antérieur qui appliquent pour un filtre, un unique critère global sur A et B, le procédé selon l'invention tire profit de l'utilisation des critères C1 et C2, le critère C2 étant distinct et dépendant du critère C1.

L'application du filtre contenant les coefficients $w_{min}$ et $w_{max}$ à la réponse impulsionnelle conduit à l'obtention d'un canal équivalent $h_{eq} = w * h$ dotée d'une longueur de canal réduite, c'est-à-dire ayant un maximum d'énergie dans sa partie utile.

Plusieurs méthodes permettent par ailleurs de déterminer $w_{min}$ telle que la minimisation de l'erreur quadratique par exemple.

*5.4 Différents types de dispositifs mettant en oeuvre le procédé selon l'invention.*

Comme mentionné précédemment, le procédé selon l'invention est utilisé à l'émission comme illustré sur la figure 5.

En effet, selon cette figure, à l'émission le signal à émettre est tout d'abord traité par un module de transformation de Fourier inverse (IFFT) 51, puis un module 52 d'insertion d'un intervalle de garde IG puis par un filtre 531 optimisé selon l'invention, c'est-à-dire décomposée en deux parties $w_{max}$ et $w_{min}$.

Une fois le signal filtré, celui-ci est envoyé dans le canal 532. On considère que le canal équivalent 53 est obtenu par application du filtre à la réponse impulsionnelle. L'application du filtre selon l'invention sur la réponse impulsionnelle, permet grâce aux coefficients $w_{max}$ de concentrer l'énergie dans la première partie du canal équivalent et les coefficients $w_{min}$ permettent de minimiser l'énergie contenue dans la « queue ».

En réception, on reçoit un signal transmis à travers le canal équivalent bruité (n(k)), et l'on traite ce signal par passage dans un module 54 de suppression de l'intervalle de garde IG, puis par un module 55 opérant une transformation de fourier (FFT).

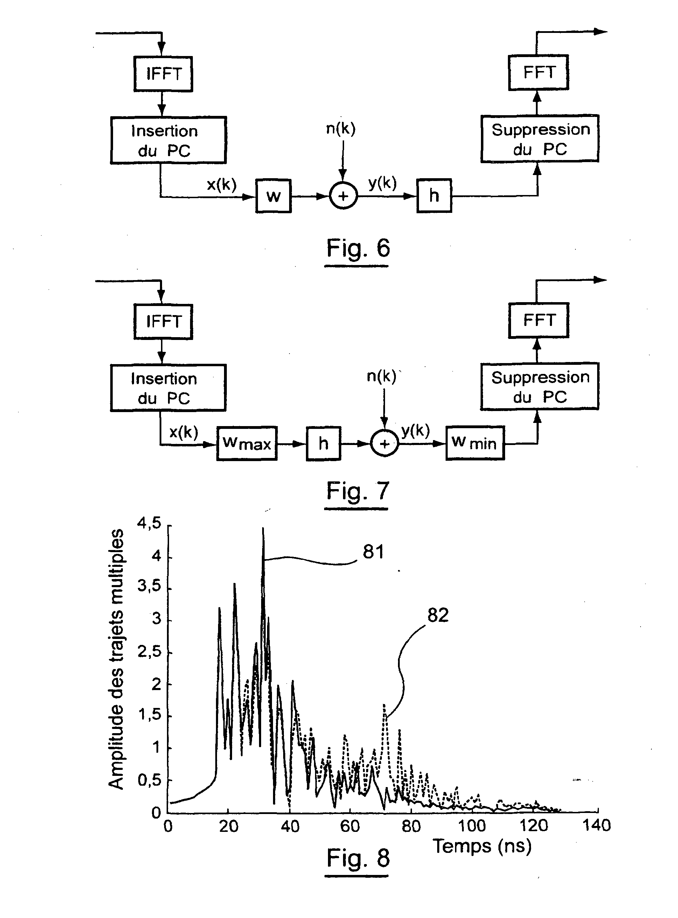

Par ailleurs, le procédé selon l'invention peut également être utilisé à la réception comme décrit en relation avec la figure 6. De même que sur la figure 5, à l'émission le signal à émettre est tout d'abord traité par un module 61 de transformation de Fourier inverse (IFFT), puis un module 62 d'insertion d'un intervalle de garde IG.

Le signal est envoyé dans le canal $h$ 63. En réception, on reçoit un signal bruité, et on applique le filtre 64 conçu selon l'invention. Le filtre utilisé en réception conjugué avec la réponse impulsionnelle du canal permet d'obtenir un canal équivalent optimal et permet ainsi d'obtenir de bonnes performances de réception.

Puis classiquement, on traite ce signal sortie du filtrage en réception par passage dans un module 65 de suppression de l'intervalle de garde IG puis par un module 66 opérant une transformation de fourier (FFT).

La figure 7 illustre quant à elle un système mettant en oeuvre le procédé selon l'invention de manière partagée entre la réception et l'émission.

Ainsi de même que pour les variantes précédentes, le signal à émettre est tout d'abord traité par un module 71 de transformation de Fourier inverse (IFFT), puis un module 72 d'insertion d'un intervalle de garde IG.

Puis un premier filtre d'émission 73 composé des coefficients $w_{max}$. Le signal est envoyé dans le canal $h$ 74. En réception, on reçoit un signal bruité, et on applique le filtre dit de réception 75 composé des coefficients $w_{min}$ obtenus selon le procédé de l'invention. Le filtre utilisé en réception conjugué avec la réponse impulsionnelle du canal et l'action du filtre à l'émission permet également d'obtenir un canal équivalent optimal et permet ainsi d'obtenir de bonnes performance de réception.

Puis classiquement, on traite ce signal sortie du filtrage en réception par passage dans un module 76 de suppression de l'intervalle de garde IG puis par un module 77 opérant une transformation de fourier (FFT).

*5.5 Performances du procédé selon l'invention.*

*5.5.1 Réduction de la complexitéde traitement de réduction de longueur de canal*

On entend par complexité le nombre d'opérations mises en oeuvrepour obtenir un canal équivalent optimal. La complexité de la technique est calculée comme suit, à partir de la représentation matricielle décrite précédemment et dépend de $L_{max}$

Par exemple, selon un premier mode de réalisation, si on initialise $w_{max}$ par un dirac :

- le calcul de $B_{vect}$ nécessite :

  • $(L_h - L_{max})L_{max} + L_w + \sum_{i=1}^{L_{max}-1}(i) - 1$ additions.

  • $(L_h - L_{max})L_{max} + \sum_{i=1}^{L_{max}-1}(i)$ multiplications.

- le calcul de $w_{min}$ requiert le calcul de :

  • deux transformées de Fourier avec une complexité maximum d'ordre $L_h \log(L_h)$ et minimum d'ordre $L_{L_{max}+1}\log(L_{L_{max}+1})$;
  • une transformation de Fourier inverse avec une complexité d'ordre $L_w\log(L_w)$ ;
  • une division élément par élement : soit $L_w$ divisions élémentaires.

Par ailleurs selon un deuxième mode de réalisation préférentiel, si on initialise $w_{max}$ par une transformée en cosinus discrète (DCT) dont la propriété est de concentrer l'énergie :

- la complexité de la transformée en cosinus discrète est de $O(L_{max}\log(L_{max}))$.
- le calcul de $B_{vect}$ demande:

  • $(L_h - L_{max})L_{max} + L_w + \sum_{i=1}^{L_{max}-1}(i) - 1$ additions.

  • $(L_h - L_{max})L_{max} + \sum_{i=1}^{L_{max}-1}(i)$ multiplications.

- le calcul de $w_{min}$ requiert le calcul de :

  • deux transformées de Fourier avec une complexité maximum d'ordre $L_h\log(L_h)$ et minimum d'ordre $L_{L_{max}+1}\log(L_{L_{max}+1})$
  • une transformée de Fourier inverse avec une complexité d'ordre $L_w\log(L_w)$.
  • une division élément par élément : soit $L_w$ divisions élémentaires.

Ainsi, si par exemple si la longueur du filtre $L_w$ =10, et la longueur de la partie utile du canal équivalent est choisie à $L_{max} = 3$ avec $L_h$ = 512 la longueur de canal, la complexité de cette technique (en nombre d'opérations) est égale à 5865. Si $L_{max} = 5$ , on obtient une complexité égale à 7897.

Le tableau suivant présente la complexité des techniques de l'état de l'art pour les techniques de réduction de longueur de canal utilisant l'ADSL (« *Assymetric Digital subscriber Line* » pour une liaison numérique à débit asymétrique sur une ligne d'abonné). Ces résultats sont notamment issus du document « Implementation complexity and communication performance tradeoffs in discrete multitone modulation equalizers » (R. K. Martin , K. Vanbleu, M. Ding , G. Ysebaert , M. Milosevic , B. L. Evans , M. Moonen and C.R. Johnson Jr., IEEE Trans. Signal Process., vol. 54, pp. 3216, Aug. 2006.) et dans lequel les paramètres nécessaires sont définis.

| Description | Complexité | Lw=10 |
|---|---|---|
| MMSE | $(\frac{2}{3}v^3 + L_w^2 + L_w v)N_\Delta + 2vL_w^2$ | 473972 |
| MSSNR | $\frac{8}{3}L_w^3 N_\Delta + L_h L_w + 2L_w^2$ | 53320 |
| min-ISI | $(\frac{8}{3}L_w^3 + 3NL_w + 5L_w^2 - 2vL_w)N_\Delta$ | 117782 |

On constate donc que la technique selon l'invention est nettement moins complexe que les techniques de l'art antérieur.

*5.5.2 Minimisation du taux d'erreurs binaire*

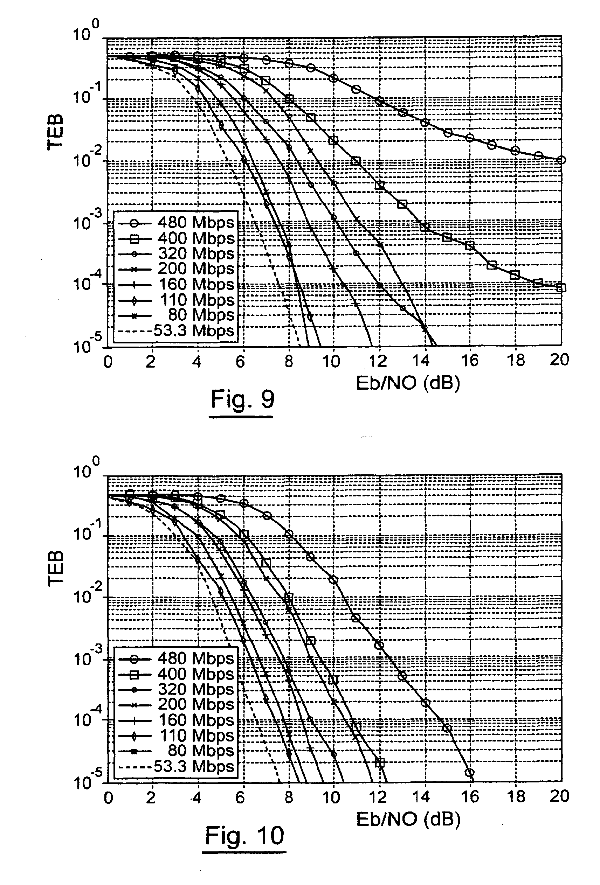

Le procédé selon l'invention permet en outre d'atteindre de bonnes performances en terme de minimisation du taux d'erreurs binaires. En effet, le graphique de la figure 9 est une superposition des réponses impulsionnelles du canal avec (81) et sans traitement (82) selon le procédé de l'invention, pour un canal ultra large bande (UWB CM4 (IEEE 80.2.15.3a).

On remarque que le procédé selon l'invention permet d'atteindre l'objectif de réduction de longueur de canal. En effet, on remarque qu'à partir de la 60ème milliseconde environ la queue de la réponse impulsionnelle du canal équivalent issu du traitement selon l'invention se caractérise par une énergie minimisée par rapport à l'énergie contenue dans la partie correspondante de la raponse impulsionnelle du canal n'ayant subit aucun traitement de réduction de longueur de canal.

Par ailleurs les figures 9 et 10 permettent de comparer ici les résultats de simulation de taux d'erreurs binaires obtenus respectivement sans et après application du procédé selon l'invention.

On remarque aisément que la convergence et les performances obtenues à l'aide du procédé selon l'invention, sont clairement améliorées. En effet, on observe une minimisation du taux d'erreur binaire (TEB) en fonction du rapport signal à bruit Eb/N0. Plus précisément, on observe une diminution efficace du taux d'erreur binaire et ce pour tout débit utilisé alors que sans le traitement selon le procédé de l'invention on obtient des taux d'erreur binaire importants lorsque le débit est important.

**Revendications**

1. Procédé de réduction de longueur de canal mettant en oeuvre un filtre de réduction de longueur de canal tenant compte d'une réponse impulsionnelle de canal, **caractérisé en ce qu'**il comprend les étapes suivantes :

   - Découpage (21) du filtre en au moins une première et une deuxième parties ;
   - Optimisation (22) de ladite première partie du filtre en fonction d'un premier critère, délivrant un premier ensemble de coefficients de filtrage ;
   - Réduction (23) de la longueur du canal par optimisation de ladite deuxième partie du filtre en fonction d'un deuxième critère, distinct dudit premier critère, et en fonction dudit premier ensemble de coefficients de filtrage de ladite première partie du filtre délivrant un deuxième ensemble de coefficients de filtrage.

2. Procédé selon la revendication 1, **caractérisé en ce que** ledit premier critère est obtenu par la détermination (221) d'une première longueur $L_{max}$, correspondant à un premier nombre $L_{max}$ de coefficients d'une première partie d'un canal équivalent, ledit canal équivalent étant obtenu par application dudit filtre à la réponse impulsionnelle du canal.

3. Procédé selon la revendication 2, **caractérisé en ce que** l'obtention dudit premier critère met également en oeuvre la détermination (222) d'une puissance maximale de ladite première partie dudit canal équivalent.

**4.** Procédé selon la revendication 2, **caractérisé en ce que** ledit deuxième critère est obtenu par la détermination (231) d'une deuxième longueur $Lx$ en fonction de ladite première longueur $L_{max}$.

**5.** Procédé selon la revendication 4, **caractérisé en ce que** l'obtention dudit deuxième critère met également en oeuvre la détermination (232) d'une puissance minimale d'une deuxième partie dudit canal équivalent.

**6.** Procédé selon la revendication 3, **caractérisé en ce que** la puissance maximale de ladite première partie dudit canal équivalent est supérieure ou égale à la puissance des $L_{max}$ premiers coefficients de la réponse impulsionnelle du canal.

**7.** Procédé selon la revendication 5, **caractérisé en ce que** la puissance minimale de ladite deuxième partie dudit canal équivalent est inférieure ou égale à la puissance des coefficients de la deuxième partie de la réponse impulsionnelle.

**8.** Procédé selon la revendication 2, **caractérisé en ce que** ladite première longueur $L_{max}$ est variable.

**9.** Procédé selon la revendication 1, **caractérisé en ce que** ladite étape de réduction est itérée (25) au moins une fois.

**10.** Filtre (531, 532) de réduction de longueur de canal tenant compte d'une réponse impulsionnelle de canal, **caractérisé en ce qu'**il comprend :

- des moyens de découpage du filtre en au moins une première et une deuxième parties ;
- des moyens d'optimisation de ladite première partie du filtre en fonction d'un premier critère, délivrant un premier ensemble de coefficients de filtrage ;
- des moyens de réduction de la longueur du canal comprenant des moyens d'optimisation de ladite deuxième partie du filtre en fonction d'un deuxième critère, distinct dudit premier critère, et en fonction dudit premier ensemble de coefficients de filtrage de ladite première partie du filtre délivrant un deuxième ensemble de coefficients de filtrage.


## Patentansprüche

**1.** Verfahren zum Verkürzen der Kanallänge, welches ein Filter zum Verkürzen der Kanallänge einsetzt, das eine Kanalimpulsantwort berücksichtigt, **dadurch gekennzeichnet, dass** es die folgenden Schritte umfasst:

- Auftrennen (21) des Filters in mindestens einen ersten und einen zweiten Teil;
- Optimierung (22) des besagten ersten Filterteils als Funktion eines ersten Kriteriums, das eine erste Menge von Filterungskoeffizienten liefert;
- Verkürzung (23) der Kanallänge durch Optimierung des besagten zweiten Teils des Filters als Funktion eines zweiten, vom besagten ersten Kriterium verschiedenen Kriteriums, und als Funktion der besagten ersten Menge von Filterungskoeffizienten des besagten ersten Filterteils, die eine zweite Menge von Filterungskoeffizienten liefert.

**2.** Verfahren nach Anspruch 1, **dadurch gekennzeichnet, dass** man das besagte erste Kriterium durch das Bestimmen (221) einer ersten Länge $L_{max}$ erhält, die einer ersten Zahl $L_{max}$ von Koeffizienten eines ersten Teils eines gleichwertigen Kanals entspricht, wobei man den besagten gleichwertigen Kanal durch Anwenden des besagten Filters auf die Impulsantwort des Kanals erhält.

**3.** Verfahren nach Anspruch 2, **dadurch gekennzeichnet, dass** das Erhalten des besagten ersten Kriteriums ebenfalls das Bestimmen (222) einer maximalen Leistung des besagten ersten Teils des besagten gleichwertigen Kanals zum Einsatz bringt.

**4.** Verfahren nach Anspruch 2, **dadurch gekennzeichnet, dass** man das besagte zweite Kriterium durch Bestimmen (231) einer zweiten Länge $L_x$ als Funktion der besagten ersten Länge $L_{max}$ erhält.

**5.** Verfahren nach Anspruch 4, **dadurch gekennzeichnet, dass** das Erhalten des besagten zweiten Kriteriums ebenfalls das Bestimmen (232) einer minimalen Leistung des besagten zweiten Teils des besagten gleichwertigen Kanals zum Einsatz bringt.

6. Verfahren nach Anspruch 3, **dadurch gekennzeichnet, dass** die maximale Leistung des besagten ersten Teils des besagten gleichwertigen Kanals größer oder gleich der Leistung der $L_{max}$ ersten Koeffizienten der Impulsantwort des Kanals ist.

7. Verfahren nach Anspruch 5, **dadurch gekennzeichnet, dass** die minimale Leistung des besagten zweiten Teils des besagten gleichwertigen Kanals kleiner oder gleich der Leistung der Koeffizienten des zweiten Teils der Impulsantwort des Kanals ist.

8. Verfahren nach Anspruch 2, **dadurch gekennzeichnet, dass** die besagte erste Länge $L_{max}$ variabel ist.

9. Verfahren nach Anspruch 1, **dadurch gekennzeichnet, dass** der besagte Verkürzungsschritt mindestens einmal wiederholt wird (25).

10. Filter (531, 532) zum Verkürzen der Kanallänge unter Berücksichtigung einer Impulsantwort des Kanals, **dadurch gekennzeichnet, dass** es folgendes umfasst:

   - Mittel zum Auftrennen des Filters in mindestens einen ersten und einen zweiten Teil;
   - Mittel zum Optimieren des besagten ersten Filterteils als Funktion eines ersten Kriteriums, das eine erste Menge von Filterungskoeffizienten liefert;
   - Mittel zum Verkürzen der Kanallänge, die Mittel zum Optimieren des besagten zweiten Teils des Filters als Funktion eines zweiten, vom besagten ersten Kriterium verschiedenen Kriteriums, und als Funktion der besagten ersten Menge von Filterungskoeffizienten des besagten ersten Filterteils umfasst, der eine zweite Menge von Filterungskoeffizienten liefert.

## Claims

1. A method for reducing channel length using a channel length reduction filter taking account of a channel pulse response, **characterised in that** it comprises the following steps:

   - dividing (21) the filter into at least first and second parts;
   - optimising (22) said first part of the filter according to a first criterion, delivering a first set of filtering coefficients;
   - reducing (23) the length of the channel by optimising said second part of the filter according to a second criterion, distinct from said first criterion, and according to said first set of filtering coefficients of said first part of the filter delivering a second set of filtering coefficients.

2. Method according to claim 1, **characterised in that** said first criterion is obtained by determining (221) a first length $L_{max}$, corresponding to a first number $L_{max}$ of coefficients of a first part of an equivalent channel, said equivalent channel being obtained by application of said filter to the pulse response of the channel.

3. Method according to claim 2, **characterised in that** the obtaining of said first criterion also uses the determination (222) of a maximum power of said first part of said equivalent channel.

4. Method according to claim 2, **characterised in that** said second criterion is obtained by the determination (231) of a second length $L_x$ according to said first length $L_{max}$

5. Method according to claim 4, **characterised in that** the obtaining of said second criterion also uses the determination (232) of a minimum power of a second part of said equivalent channel.

6. Method according to claim 3, **characterised in that** the maximum power of said first part of said equivalent channel is greater than or equal to the power of the first $L_{max}$ coefficients of the pulse response of the channel.

7. Method according to claim 5, **characterised in that** the minimum power of said second part of said equivalent channel is less than or equal to the power of the coefficients of the second part of the pulse response.

8. Method according to claim 2, **characterised in that** said first length $L_{max}$ is variable.

9. Method according to claim 1, **characterised in that** said reduction step is iterated (25) at least once.

10. Filter for reducing channel length (531, 532) taking account of a channel pulse response, **characterised in that** it comprises:

   - means for dividing the filter into at least first and second parts;
   - means for optimising said first part of the filter according to a first criterion, delivering a first set of filtering coefficients;
   - means for reducing the length of the channel comprising means for optimising said second part of the filter according to a second criterion, distinct from said first criterion, and according to said first set of filtering coefficients of said first part of the filter delivering a second set of filtering coefficients.

Fig. 1

Fig. 3

$h=[h_{max} \; h_{min}]$

$h_{eq}=[h_{eq\_max}h_{eq\_min}]$

Fig. 2

$$h_{eq} = \left[ h_{eq\_max}(0) \ldots h_{eq\_max}(L_{max}-1) \; h_{eq\_min}(L_{max}) \ldots \ldots \right.$$
$$\left. \ldots \ldots h_{eq\_min}(L_h + L_w - 1) \right]$$

Fig. 4

Fig. 5

Fig. 6

Fig. 7

Fig. 8

Fig. 9

Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. FALCONER ; F. R. MAGEE.** Adaptive channel memory truncation for maximum likehood sequence estimation. *Bell System Technical Journal,* 1973, vol. 52 (9), 1541-1562
- **J. W. MELSA ; R. C. YOUNCE ; C. E. ROHRS.** Impulse response shortening for discrete multitone tranceivers. *IEEE Trans. Communications,* 1996, vol. 44 (12), 1662-1672
- **S.I. HUSAIN ; J. YUAN ; J. ZHANG.** Impulse Response Shortening through Limited Time Reversed Channel in MB OFDM UWB Systems. *ISCIT,* Octobre 2007, 1269-1273

- **ARSLAN, B ; L. EVANS ; S. KIAEI.** Equalization for discrete multitone receivers to maximize bit rate. *IEEE trans. Signal Processing,* 2001, vol. 49 (12), 3123-3135
- **R. K. MARTIN ; K. VANBLEU ; M. DING ; G. YSEBAERT ; M. MILOSEVIC ; B. L. EVANS ; M. MOONEN ; C.R. JOHNSON JR.** Implementation complexity and communication performance tradeoffs in discrete multitone modulation equalizers. *IEEE Trans. Signal Process.,* Août 2006, vol. 54, 3216